# EUROPEAN PATENT SPECIFICATION

(11) **EP 4 357 068 B1**
(45) Date of publication and mention of the grant of the patent: **29.04.2026**
(21) Application number: 23201551.1
(22) Date of filing: 04.10.2023
(51) Int. Cl.: B23K 101/36, B23K 26/082, B23K 26/08, B23K 26/21, B23K 26/244, B23K 26/26, B23K 26/28, B23K 37/04

(54) **APPARATUS FOR MANUFACTURING SECONDARY BATTERY**
VORRICHTUNG ZUR HERSTELLUNG EINER SEKUNDÄRBATTERIE
APPAREIL DE FABRICATION DE BATTERIE SECONDAIRE

(30) Priority: 06.10.2022 KR 20220127725
(43) Date of publication of application: 24.04.2024
(73) Proprietor: Samsung SDI Co., Ltd., Yongin-si, Gyeonggi-do 17084 (KR)
(72) Inventor: AN, Yong Gyu, 17084 Yongin-si (KR); YOON, Tae Jin, 17084 Yongin-si (KR); CHO, Su Sang, 17084 Yongin-si (KR); AN, Seong Bae, 17084 Yongin-si (KR); RYU, Sang Hyun, 17084 Yongin-si (KR); ROH, Jae Hoon, 17084 Yongin-si (KR); PARK, Myung Jun, 17084 Yongin-si (KR)
(74) Representative: Marks & Clerk LLP

(56) References cited:
- WO-A1-2022/065776
- WO-A1-2022/156800
- JP-A- 2012 006 029

## Description

### BACKGROUND

### 1. Field

Aspects of embodiments of the present disclosure relate to an apparatus for manufacturing a secondary battery.

### 2. Description of the Related Art

A secondary battery is a chargeable and dischargeable battery (e.g., is a rechargeable battery), unlike a primary battery that is not designed to be chargeable. Low-capacity secondary batteries are used in small, portable electronic devices, such as smart phones, feature phones, tablet computers, notebook computers, digital cameras, and camcorders, while large-capacity secondary batteries are widely used as a power source and power storage for driving a motor, such as in hybrid vehicles, electric vehicles, and the like.

Secondary batteries may be classified as cylindrical, prismatic, or pouchtype secondary batteries according to their external appearance. Generally, a cylindrical secondary battery includes an electrode assembly, a can, a cap assembly, a gasket that insulates the can and the cap assembly from each other. Further, some cylindrical secondary batteries have a structure in which a negative electrode member of the electrode assembly is electrically connected to a bottom of the can through a negative electrode tab to form a negative pole (or negative terminal), and a positive electrode member of the electrode assembly is electrically connected to a terminal of the cap assembly through a positive electrode tab to form a positive pole (or positive terminal). In some cases, resistance welding is used to bond the negative electrode tab to the bottom of the can. But the resistance welding method has a relatively high failure rate, and it is not easy to detect defects in welds formed by this method. JP 2012006029 A (on which the preamble of claim 1 is based) relates to a laser machining apparatus that includes a retaining table retaining a work-piece, a rotary support rotatably supporting the retaining table on its vertical direction as the axis of rotation, and a laser machining means machining the work-piece retained with the retaining table by irradiating the same with a laser beam, wherein the laser beam is converged on the scheduled machining line of the work-piece W for irradiation by scanning the convergence point uniaxially while rotating the retaining table.

WO 2022/156800 A1 relates to a laser welding system for sealingly welding a cell top cover, the laser welding system comprising: a laser emitting device for generating a scanning welding laser beam which is irradiated to a portion to be welded of the cell top cover; and a control device at least for controlling the laser emitting device to perform continuous scanning sealing welding on the cell top cover, wherein the laser welding system is configured to complete sealing welding of the cell top cover at only one work station.

The above-described information in this Background section is intended to enhance understanding of the background of the present disclosure and, thus, may include information that does not constitute the related (or prior) art.

### SUMMARY

Embodiments of the present disclosure provide an apparatus for manufacturing a secondary battery having improved welding quality.

An apparatus for manufacturing a secondary battery as recited in Claim 1 includes: an index table configured to receive a cell (e.g., a secondary battery cell), the cell including an electrode assembly, a can accommodating the electrode assembly, and an electrode tab between the electrode assembly and the can to electrically connect the electrode assembly to the can; a laser scanner configured to irradiate a laser onto an outer surface of the can to weld the electrode tab to the can; and a controller configured to variably control the laser scanner according to an operation (e.g. a movement, such as a rotation rate) of the index table.

The index table includes a table, a jig along a circumference of the table and configured to fix the can (e.g., to fix the cell), and a motor (e.g. a table motor) configured to rotate the table. The apparatus further includes an encoder configured to measure a rotation rate of the motor (e.g. the table motor) and to input the measured rotation rate to the controller, and the controller is configured to variably control the laser scanner according to the rotation rate of the motor (e.g. the table motor).

The laser scanner may include a laser oscillator, an X-axis mirror configured to reflect a laser emitted from the laser oscillator, an X-axis motor configured to rotate the X-axis mirror, a Y-axis mirror configured to reflect the laser reflected by the X-axis mirror, a Y-axis motor configured to rotate the Y-axis mirror, and an objective lens configured to concentrate the laser reflected by the Y-axis mirror.

When the rotation rate of the motor is constant, the controller may be configured to drive the laser scanner in a predetermined manner. When the rotation rate of the motor (e.g. the table motor) increases, the controller may be configured to drive at least one of the X-axis motor and the Y-axis motor slower than in the predetermined manner; or when the rotation rate of the motor (e.g. the table motor) decreases, the controller may be configured to drive at least one of the X-axis motor and the Y-axis motor faster than in the predetermined manner.

When the rotation rate of the motor (e.g. the table motor) is constant, the controller may be configured to drive the laser scanner in a predetermined manner. When the rotation rate of the motor (e.g. the table motor) increases, the controller may be configured to control the laser oscillator to emit the laser in advance compared to the predetermined manner; or when the rotation rate of the motor (e.g. the table motor) decreases, the controller may be configured to control the laser oscillator such that the laser is retarded compared to the predetermined manner.

The laser scanner may be configured to form a welding pattern in a linear shape, a curved shape, or a combination of the linear shape and the curved shape.

The laser scanner may be configured to form a welding pattern while the index table rotates.

At least some of the above and other features of the invention are set out in the claims.

### BRIEF DESCRIPTION OF THE DRAWINGS

The accompanying drawings are included to provide a further understanding of aspects and features of the present disclosure and are incorporated in and constitute a part of this specification. The drawings illustrate embodiments of the present disclosure and, together with the description, explain aspects and features of the present disclosure. In the drawings:
FIG. 1 is a schematic diagram of an apparatus for manufacturing a secondary battery according to an embodiment;
FIG. 2 is a perspective view of an index table in the apparatus for manufacturing the secondary battery according to an embodiment;
FIG. 3 is a schematic view of a laser scanner in the apparatus for manufacturing the secondary battery according to an embodiment;
FIG. 4 describes a method for welding a can to a negative electrode tab by using the apparatus for manufacturing the secondary battery according to an embodiment; and
FIGS. 5A to 5F illustrate welding patterns formed by using the apparatus for manufacturing the secondary battery according to various embodiments.

### DETAILED DESCRIPTION

Hereinafter, embodiments of the present disclosure will be described, in detail, with reference to the accompanying drawings. The present disclosure, and embodiments thereof, may be embodied in many different forms and should not be construed as being limited to the embodiments described herein. Rather, these embodiments are provided so that this disclosure will be thorough and complete and will fully convey the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

The controller and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the controller may be formed on one integrated circuit (IC) chip or on separate IC chips. Further, the various components of the controller may be implemented on a flexible printed circuit film, a tape carrier package (TCP), a printed circuit board (PCB), or formed on a same substrate as the controller. Further, the various components of the controller may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the example embodiments of the present disclosure.

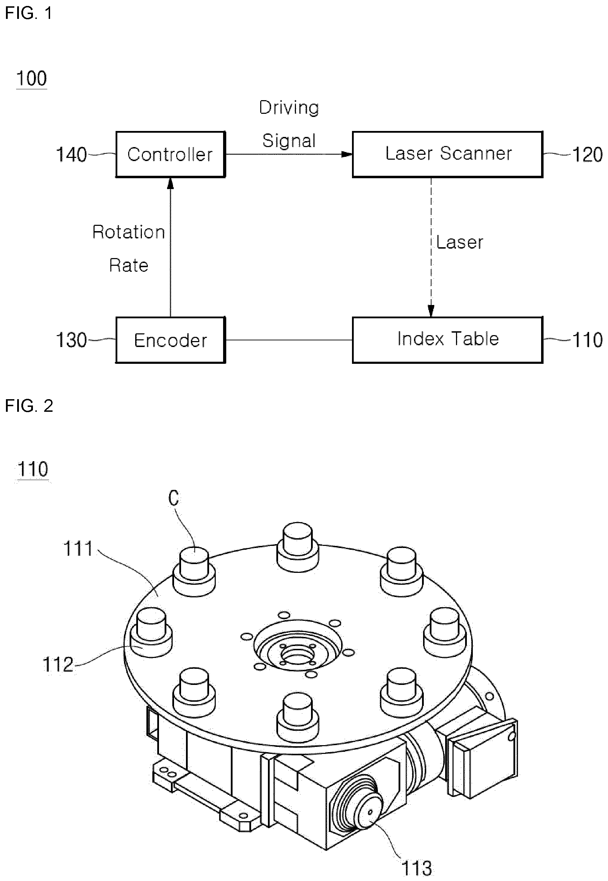

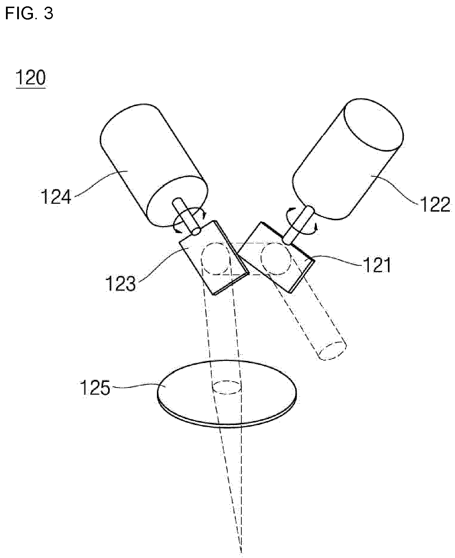

FIG. 1 is a configuration diagram of an apparatus 100 for manufacturing a secondary battery according to an embodiment. FIG. 2 is a perspective view of an index table 110 in the apparatus 100 for manufacturing the secondary battery according to an embodiment. FIG. 3 is a schematic view of a laser scanner 120 in the apparatus 100 for manufacturing the secondary battery according to an embodiment.

Referring to FIG. 1, the apparatus 100 for manufacturing a secondary battery includes an index table 110, a laser scanner 120, an encoder 130, and a controller 140.

Referring to FIG. 2, the index table 110 includes a table 111 (such as a diskshaped (e.g., a circular) table), a jig 112 disposed along a circumference of the table 111 to fix an object to be welded (e.g., a cell C) thereto, and a motor 113 configured to rotate the table 111.

The cell C may include an electrode assembly including a negative electrode plate, a positive electrode plate, and a separator, a can accommodating the electrode assembly, and a negative electrode tab disposed between the electrode assembly and the can to electrically connect the negative electrode plate to the can. The can and the negative electrode tab may be welded to each other by the apparatus 100 for manufacturing the secondary battery. The cell C may further include a cap assembly for sealing the can through a subsequent process, a positive electrode tab electrically connecting the positive electrode plate to the cap assembly, and an electrolyte injected into the can.

Referring to FIG. 3, the laser scanner 120 may include a laser oscillator, an X-axis mirror 121 for reflecting a laser emitted from the laser oscillator, an X-axis motor 122 configured to rotate the X-axis mirror 121, a Y-axis mirror 123 for reflecting the laser reflected by the X-axis mirror 121, a Y-axis motor 124 configured to rotate the Y-axis mirror 123, and an objective lens 125 for concentrating the laser reflected by the Y-axis mirror 123.

In some embodiments, an angle and a rotation rate of the X-axis mirror 121 may be adjusted by using the X-axis motor 122 so that the laser is scanned along an X-axis (e.g. of the index table), and an angle and a rotation rate of the Y-axis mirror 123 may be adjusted by using the Y-axis motor 124 so that the laser is scanned along a Y-axis (e.g. of the index table). As a result, the X-axis scanning and the Y-axis scanning may be combined to irradiate the laser in a two-dimensional pattern.

The laser scanner 120 may weld the can to the negative electrode tab of the cell C. In some embodiments, instead of performing the welding in a state in which the index table 110 is stopped (e.g., in which the cell C is stopped) and then transferring the cell C by the index table 110 after the welding is finished, the welding may be performed while the index table 110 moves (e.g., while the cell C is transferred by the index table 110). In such embodiments, the welding may be performed without stopping.

The encoder 130 measures the rotation rate of the motor 113 (in real time) and transmits the measured rotation rate to the controller 140.

The controller 140 may drive the X-axis motor 122 and the Y-axis motor 124 in consideration of a diameter and rotation rate of the table 111, the number of heads and/or pressing time and stabilization time during the welding, etc., so that a welding pattern (e.g., a predetermined or preprogramed welding pattern) is formed (hereinafter, referred to as the controller's 'fundamental mode' or 'predetermined manner').

However, the fundamental mode (or predetermined manner) may be set so that the welding pattern is formed with respect to the cell C while the cell C is experiencing uniform motion along a path (e.g., a predetermined or preprogramed path). Therefore, if the cell C is unexpectedly accelerated or decelerated, the welding pattern may be improperly formed.

Thus, the controller 140 may variably control the laser oscillator, the X-axis motor 122, and/or the Y-axis motor 124 in real time based on the rotation rate of the motor 113 as input from the encoder 130.

For example, if the index table 110 is accelerated, the encoder 130 may measure the (new) rotation rate of the motor 113 to transmit the measured rotation rate to the controller 140. When it is determined by the controller that the index table 110 has accelerated, the controller 140 may drive the laser oscillator such that the laser is (slightly) emitted in advance. Alternatively, or in addition, the X-axis motor 122 and/or the Y-axis motor 124 may be driven slowly compared to the fundamental mode (or predetermined manner). If the index table 110 (e.g., the cell C) is decelerated, the same or similar process as described above may occur, but in reverse (e.g., the controller 140 may drive the laser oscillator such that the laser is (slightly) retarded compared to the fundamental mode (or predetermined manner); alternatively, or in addition, the X-axis motor 122 and/or the Y-axis motor 124 may be driven quickly compared to the fundamental mode (or predetermined manner)).

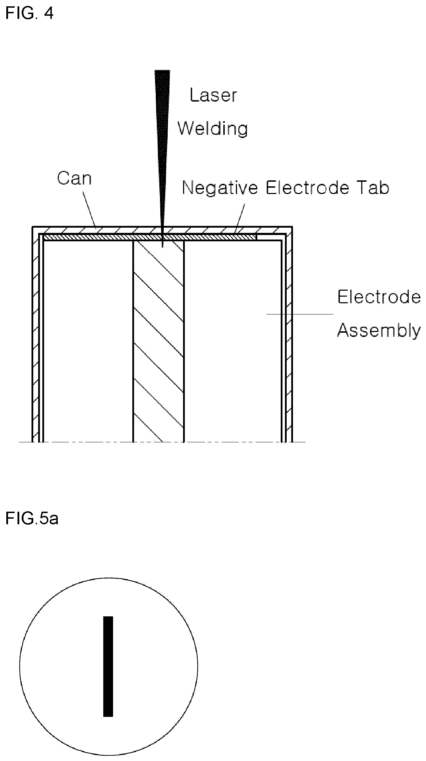

FIG. 4 describes a method for welding the can to the negative electrode tab by using the apparatus 100 for manufacturing the secondary battery according to an embodiment.

As described above, the cell C to be welded may include an electrode assembly including a negative electrode plate, a positive electrode plate, and a separator, a can accommodating the electrode assembly, and a negative electrode tab disposed between the electrode assembly and the bottom of the can to electrically connect the negative electrode plate to the bottom of the can.

The cell C may be mounted on the jig 112 so that the bottom of the can faces the laser scanner 120, and the laser scanner 120 may irradiate the laser onto an outer surface of the bottom of the can to weld the bottom of the can to the negative electrode tab.

FIGS. 5A to 5F illustrate welding patterns formed by using the apparatus 100 for manufacturing the secondary battery according to various embodiments.

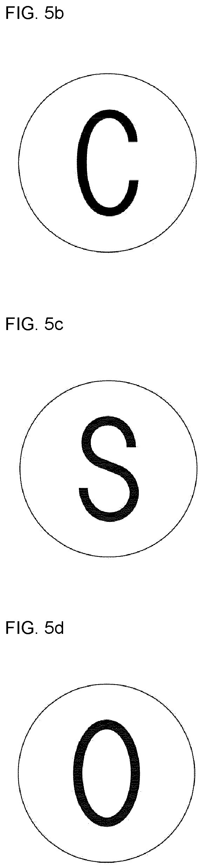

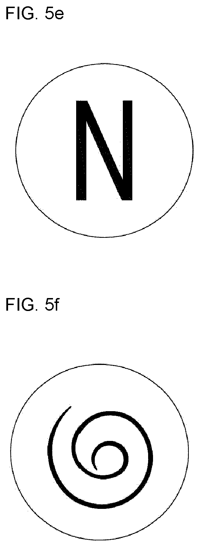

The laser scanner 120 may irradiate a laser onto an outer surface of the bottom of the can to form a welding pattern in a linear shape, a curved shape, or a combination of the linear shape and the curved shape. For example, the laser scanner 120 may form the welding pattern in an I shape (see, e.g., FIG. 5A), a C shape (see, e.g., FIG. 5B), an S shape (see, e.g., FIG. 5C), an O shape (see, e.g., FIG. 5D), an N shape (see, e.g., FIG. 5E), a spiral shape (see, e.g., FIG. 5F), and the like. These are, however, only some example embodiments, and the laser scanner 120 may form other welding pattern shapes.

During the welding process, the encoder 130 measures the rotation rate of the motor 113 (e.g., may measure the rotation rate of the index table 110) (in real time) and transmits the measured rotation rate to the controller 140. The controller 140 may variably control laser emission timing, X-axis scanning, and/or Y-axis scanning in real time based on the measured rotation rate of the motor 113, which is input from (or received from) the encoder 130. Thus, the rotation rate may be more accurately measured and the welding may be more accurately performed.

Embodiments of the present disclosure may provide an apparatus for manufacturing the secondary battery in which the negative electrode tab and the bottom of the can are welded to each other by using non-contact laser welding. Further, the controller variably controls the laser scanner in response to (or according to) the rotation rate of the index table so that even if the index table is accelerated or decelerated, the welding pattern is accurately formed and the welding quality is ensured or improved.

The above-described embodiments are merely example embodiments of the apparatus for manufacturing the secondary battery, and the present disclosure is not limited to these embodiments. The present disclosure includes all ranges of technologies that may be variously modified by an ordinary person in the art, to which the present disclosure pertains, without departing from the scope of the appended claims.

## Claims

1. An apparatus (100) for manufacturing a secondary battery, the apparatus (100) comprising:
an index table (110) configured to receive a secondary battery cell (C), the secondary battery cell (C) comprising an electrode assembly, a can accommodating the electrode assembly, and an electrode tab between the electrode assembly and the can to electrically connect the electrode assembly to the can;
a laser scanner (120) configured to irradiate a laser onto an outer surface of the can to weld the electrode tab to the can; and
a controller (140) configured to variably control the laser scanner (120) according to an operation of the index table (110),
**characterised in that**
the apparatus (100) further comprises an encoder (130),
wherein the index table (110) comprises a table (111), a jig (112) along a circumference of the table (111) and configured to fix the can, and a motor (113) configured to rotate the table (111),
wherein the encoder (130) is configured to measure a rotation rate of the motor (113) and to input the measured rotation rate to the controller (140), and
wherein the controller (140) is configured to variably control the laser scanner (120) according to the rotation rate of the motor (113).

2. The apparatus (100) as claimed in claim 1, wherein the laser scanner (120) comprises a laser oscillator, an X-axis mirror (121) configured to reflect a laser emitted from the laser oscillator, an X-axis motor (122) configured to rotate the X-axis mirror (121), a Y-axis mirror (123) configured to reflect the laser reflected by the X-axis mirror (121), a Y-axis motor (124) configured to rotate the Y-axis mirror (123), and an objective lens (125) configured to concentrate the laser reflected by the Y-axis mirror (123).

3. The apparatus (100) as claimed in claim 2, wherein, when the rotation rate of the motor (113) is constant, the controller (140) is configured to drive the laser scanner (120) in a predetermined manner, and
wherein, when the rotation rate of the motor (113) increases, the controller (140) is configured to drive at least one of the X-axis motor (122) and the Y-axis motor (124) slower than in the predetermined manner; or when the rotation rate of the motor (113) decreases, the controller (140) is configured to drive at least one of the X-axis motor (122) and the Y-axis motor (124) faster than in the predetermined manner.

4. The apparatus (100) as claimed in claim 2 or claim 3, wherein, when the rotation rate of the motor (113) is constant, the controller (140) is configured to drive the laser scanner (120) in a predetermined manner, and
wherein, when the rotation rate of the motor (113) increases, the controller (140) is configured to control the laser oscillator to emit the laser in advance compared to the predetermined manner; or when the rotation rate of the motor (113) decreases, the controller (140) is configured to control the laser oscillator such that the laser is retarded compared to the predetermined manner.

5. The apparatus (100) as claimed in any one of claims 1 to 4, wherein the laser scanner (120) is configured to form a welding pattern in a linear shape, a curved shape, or a combination of the linear shape and the curved shape.

6. The apparatus (100) as claimed in any one of claims 1 to 5, wherein the laser scanner (120) is configured to form a welding pattern while the index table (110) rotates.

## Patentansprüche

1. Einrichtung (100) zur Herstellung einer Sekundärbatterie, wobei die Einrichtung (100) Folgendes umfasst:
einen Drehtisch (110), der zur Aufnahme einer Sekundärbatteriezelle (C) ausgelegt ist, wobei die Sekundärbatteriezelle (C) eine Elektrodenanordnung, ein Gehäuse, das die Elektrodenanordnung aufnimmt, sowie einen Elektrodenanschluss zwischen der Elektrodenanordnung und dem Gehäuse zur elektrischen Verbindung der Elektrodenanordnung mit dem Gehäuse umfasst;
einen Laserscanner (120), der so ausgelegt ist, dass er einen Laserstrahl auf eine Außenfläche des Gehäuses richtet, um den Elektrodenanschluss mit dem Gehäuse zu verschweißen; und
eine Steuereinheit (140), die so ausgelegt ist, dass sie den Laserscanner (120) einem Betrieb des Drehtischs (110) entsprechend variabel steuert, **dadurch gekennzeichnet, dass**
die Einrichtung (100) ferner einen Encoder (130) umfasst,
wobei der Drehtisch (110) einen Tisch (111), eine Vorrichtung (112) entlang des Umfangs des Tisches (111), die zur Fixierung des Gehäuses ausgelegt ist, und einen Motor (113) umfasst, der zum Drehen des Tisches (111) ausgelegt ist,
wobei der Encoder (130) so ausgelegt ist, dass er eine Drehzahl des Motors (113) misst und die gemessene Drehzahl an die Steuereinheit (140) übermittelt, und
wobei die Steuereinheit (140) so ausgelegt ist, dass sie den Laserscanner (120) entsprechend der Drehzahl des Motors (113) variabel steuert.

2. Einrichtung (100) nach Anspruch 1, wobei der Laserscanner (120) einen Laseroszillator, einen X-Achsen-Spiegel (121), der zur Reflexion eines vom Laseroszillator emittierten Lasers ausgelegt ist, einen X-Achsen-Motor (122), der zur Drehung des X-Achsen-Spiegels (121) ausgelegt ist, einen Y-Achsen-Spiegel (123), der zur Reflexion des vom X-Achsen-Spiegel (121) reflektierten Lasers ausgelegt ist, einen Y-Achsen-Motor (124), der zur Drehung des Y-Achsen-Spiegels (123) ausgelegt ist, und eine Objektivlinse (125) umfasst, die zur Konzentration des vom Y-Achsen-Spiegel (123) reflektierten Lasers ausgelegt ist.

3. Einrichtung (100) nach Anspruch 2, wobei die Steuereinheit (140) so ausgelegt ist, dass sie den Laserscanner (120) auf eine vorgegebene Weise ansteuert, wenn die Drehzahl des Motors (113) konstant ist, und
wobei die Steuereinheit (140) so ausgelegt ist, dass sie den X-Achsen-Motor (122) und/oder den Y-Achsen-Motor (124) langsamer als auf die vorgegebene Weise ansteuert, wenn die Drehzahl des Motors (113) ansteigt; oder die Steuereinheit (140) so ausgelegt ist, dass sie den X-Achsen-Motor (122) und/oder den Y-Achsen-Motor (124) schneller als auf die vorgegebene Weise ansteuert, wenn die Drehzahl des Motors (113) kleiner wird.

4. Einrichtung (100) nach Anspruch 2 oder Anspruch 3, wobei die Steuereinheit (140) so ausgelegt ist, dass sie den Laserscanner (120) auf eine vorgegebene Weise ansteuert, wenn die Drehzahl des Motors (113) konstant ist, und
wobei die Steuereinheit (140) so ausgelegt ist, dass sie den Laseroszillator so steuert, dass er den Laser früher als auf die vorgegebene Weise emittiert, wenn die Drehzahl des Motors (113) ansteigt; oder die Steuereinheit (140) so ausgelegt ist, dass sie den Laseroszillator so steuert, dass der Laser bezogen auf die vorgegebene Weise verzögert ist, wenn die Drehzahl des Motors (113) kleiner wird.

5. Einrichtung (100) nach einem der Ansprüche 1 bis 4, wobei der Laserscanner (120) so ausgelegt ist, dass er ein Schweißmuster in linearer Form, in gekrümmter Form oder in einer Kombination aus linearer Form und gekrümmter Form erzeugt.

6. Einrichtung (100) nach einem der Ansprüche 1 bis 5, wobei der Laserscanner (120) so ausgelegt ist, dass er ein Schweißmuster erzeugt, während sich der Drehtisch (110) dreht.

## Revendications

1. Appareil (100) pour la fabrication d'une batterie secondaire, l'appareil (100) comprenant :
une table d'indexation (110) configurée pour recevoir une cellule de batterie secondaire (C), la cellule de batterie secondaire (C) comprenant un ensemble d'électrodes, un boîtier recevant l'ensemble d'électrodes et une languette d'électrode entre l'ensemble d'électrodes et le boîtier pour connecter électriquement l'ensemble d'électrodes au boîtier ;
un scanner laser (120) configuré pour irradier un laser sur une surface extérieure du boîtier afin de souder la languette d'électrode au boîtier ; et
un dispositif de commande (140) configuré pour commander de manière variable le scanner laser (120) sur la base d'un fonctionnement de la table d'indexation (110), **caractérisé en ce que**
l'appareil (100) comprend en outre un encodeur (130)
dans lequel la table d'indexation (110) comprend une table (111), un gabarit (112) le long d'une circonférence de la table (111) et configuré pour fixer le boîtier, et un moteur (113) configuré pour faire tourner la table (111),
dans lequel l'encodeur (130) est configuré pour mesurer une vitesse de rotation du moteur (113) et pour transmettre la vitesse de rotation mesurée au dispositif de commande(140), et
dans lequel le dispositif de commande (140) est configuré pour commander de manière variable le scanner laser (120) sur la base de la vitesse de rotation du moteur (113).

2. Appareil (100) selon la revendication 1, dans lequel le scanner laser (120) comprend un oscillateur laser, un miroir d'axe X (121) configuré pour réfléchir un laser émis par l'oscillateur laser, un moteur d'axe X (122) configuré pour faire tourner le miroir d'axe X (121), un miroir d'axe Y (123) configuré pour réfléchir le laser réfléchi par le miroir d'axe X (121), un moteur d'axe Y (124) configuré pour faire tourner le miroir d'axe Y (123) et une lentille d'objectif (125) configurée pour concentrer le laser réfléchi par le miroir d'axe Y (123).

3. Appareil (100) selon la revendication 2, dans lequel, lorsque la vitesse de rotation du moteur (113) est constante, le dispositif de commande (140) est configuré pour entraîner le scanner laser (120) d'une manière prédéterminée, et
dans lequel, lorsque la vitesse de rotation du moteur (113) augmente, le dispositif de commande (140) est configuré pour entraîner au moins l'un des moteurs de l'axe X (122) et le moteur de l'axe Y (124) plus lentement que de la manière prédéterminée ; ou lorsque la vitesse de rotation du moteur (113) diminue, le dispositif de commande (140) est configuré pour entraîner au moins l'un du moteur d'axe X (122) et du moteur d'axe Y (124) plus rapidement que de la manière prédéterminée.

4. Appareil (100) selon la revendication 2 ou la revendication 3, dans lequel, lorsque la vitesse de rotation du moteur (113) est constante, le dispositif de commande (140) est configuré pour entraîner le scanner laser (120) d'une manière prédéterminée, et
dans lequel, lorsque la vitesse de rotation du moteur (113) augmente, le dispositif de commande (140) est configuré pour commander l'oscillateur laser afin d'émettre le laser en avance par comparaison à la manière prédéterminée ; ou lorsque la vitesse de rotation du moteur (113) diminue, le dispositif de commande (140) est configuré pour commander l'oscillateur laser de sorte que le laser soit retardé par comparaison à la manière prédéterminée.

5. Appareil (100) selon l'une quelconque des revendications 1 à 4, dans lequel le scanner laser (120) est configuré pour former un motif de soudage de forme linéaire, de forme incurvée ou d'une combinaison de la forme linéaire et de la forme incurvée.

6. Appareil (100) selon l'une quelconque des revendications 1 à 5, dans lequel le scanner laser (120) est configuré pour former un motif de soudage pendant que la table d'indexation (110) tourne.
